(19) **Europäisches Patentamt / European Patent Office / Office européen des brevets**

(11) **EP 4 711 413 A1**

(12) **EUROPEAN PATENT APPLICATION**

(43) Date of publication:
18.03.2026 Bulletin 2026/12

(21) Application number: 25197417.6

(22) Date of filing: 21.08.2025

(51) International Patent Classification (IPC):
$C08L\ 9/06\ ^{(2006.01)}$  $B60C\ 1/00\ ^{(2006.01)}$
$C08K\ 3/04\ ^{(2006.01)}$

(52) Cooperative Patent Classification (CPC):
(C-Sets available)
**B60C 1/0016;** B60C 2011/0025; B60C 2200/10
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 12.09.2024 JP 2024158497

(71) Applicant: **Sumitomo Rubber Industries, Ltd.**
**Kobe-shi, Hyogo 651-0072 (JP)**

(72) Inventor: **IKAI, Takuma**
**651-0072 Kobe-shi (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire comprising a tread part, the tread part being composed of a rubber composition comprising a rubber component, a filler, and a plasticizer, wherein the rubber component comprises a styrene-butadiene rubber, wherein the filler comprises carbon black, wherein the plasticizer comprises a resin component, and wherein T is 25.0 or more and R/T is less than 10.0, where R represents a radius of curvature, in mm, of the tread part in a tire equator, and T represent a tan $\delta$ peak temperature, in °C, of the rubber composition.

EP 4 711 413 A1

(52) Cooperative Patent Classification (CPC): (Cont.)

C-Sets
**C08L 9/06, C08L 47/00, C08L 91/00, C08L 91/06,
C08K 5/18, C08K 5/09, C08K 3/22, C08K 3/06,
C08K 5/47;
C08L 9/06, C08L 61/06, C08L 91/00, C08L 91/06,
C08K 5/18, C08K 5/09, C08K 3/22, C08K 3/06,
C08K 5/47**

**Description**

TECHNICAL FIELD

The present invention relates to a tire.

BACKGROUND OF THE INVENTION

For the purpose of securing safety, etc., grip performance such as dry grip performance and the like is required for a tire, and various tires have been developed in order to meet this requirement (JP 2019-203073 A).

SUMMARY OF THE INVENTION

Examples of a method of bringing out a high dry grip performance include, for example, increasing a tan $\delta$ peak temperature of a tread rubber. However, if the tan $\delta$ peak temperature is increased too much, the tread rubber falls into a glass state at an operational temperature of a tire and hardens, and therefore, there is a concern about occurrence of slip and the like during running.
It is an object of the present invention to provide a tire that can improve in dry grip performance.
The present invention relates to:

a tire comprising a tread part,
the tread part being composed of a rubber composition comprising a rubber component, a filler, and a plasticizer,
wherein the rubber component comprises a styrene-butadiene rubber,
wherein the filler comprises carbon black,
wherein the plasticizer comprises a resin component, and
wherein T is 25.0 or more and R/T is less than 10.0,
where R represents a radius of curvature, in mm, of the tread part in a tire equator, and T represent a tan $\delta$ peak temperature, in °C, of the rubber composition.

According to the present invention, provided is a tire that can improve in dry grip performance.

BRIEF DESCRIPTION OF THE DRAWINGS

FIG. 1 is a meridian cross-sectional view of a tire relating to one embodiment of the present invention.
FIG. 2 shows a variation of the tire relating to the present embodiment.
FIG. 3 is one example of a cross-sectional view taken along a plane including a tire rotation axis, which shows a state where a tire comes into contact with a road surface (a case where the crown part falls within a ground-contacting surface).
FIG. 4 is one example of a cross-sectional view taken along a plane including a tire rotation axis, which shows a state where a tire comes into contact with a road surface (a case where the crown part extends up to the outside of the ground-contacting surface).

DETAILED DESCRIPTION

A tire that is one embodiment of the present invention is a tire comprising a tread part, the tread part being composed of a rubber composition comprising a rubber component, a filler, and a plasticizer, wherein the rubber component comprises a styrene-butadiene rubber, wherein the filler comprises carbon black, wherein the plasticizer comprises a resin component, and wherein T is 25.0 or more and R/T is less than 10.0, where R represents a radius of curvature, in mm, of the tread part in a tire equator, and T represent a tan $\delta$ peak temperature, in °C, of the rubber composition.
Although it is not intended to be bound by a theory, in the tire of the present invention, for example, the following can be considered as a mechanism by which dry grip performance is improved.
(1) When a rubber component comprising a styrene-butadiene rubber, a filler comprising carbon black, and a plasticizer comprising a resin component are compounded, heat generation by a tread rubber can be facilitated, which is therefore considered to contribute to improvement of dry grip performance.
Moreover, (2) when a radius of curvature of a tread part in a tire equator is restricted and a ground-contacting area of the tread part is decreased, a pressure applied to the tread part is increased, and an increase of a temperature of the tread part during running is facilitated, so that it is considered that it becomes easy to exhibit dry grip performance despite use of a tread rubber with a high tan δ peak temperature.

It is considered that, with cooperation of the above-described (1) and (2), a remarkable effect of improving dry grip performance is achieved.

A content of a plasticizer based on 100 parts by mass of the rubber component in the rubber composition is preferably 120 parts by mass or more from the viewpoint of facilitating heat generation by the tread rubber to further improve grip performance.

A content rate of a resin component in the plasticizer is preferably 60% by mass or more from the viewpoint of facilitating heat generation by the tread rubber to further improve grip performance.

The resin component preferably comprises a sustainable resin from the viewpoint of environmental load.

A content of a resin component based on 100 parts by mass of the rubber component in the rubber composition is preferably 50 parts by mass or more from the viewpoint of facilitating heat generation by the tread rubber to further improve grip performance.

An acetone extraction amount of the rubber composition is preferably 30% by mass or more from the viewpoint of facilitating heat generation by the tread rubber to further improve grip performance.

A total styrene amount in the rubber component is preferably 40% by mass or more from the viewpoint of facilitating heat generation by the tread rubber to further improve grip performance.

The radius of curvature R is preferably less than 250 mm. When R is within the above-described range to decrease a ground-contacting area of the tread part, a pressure applied to the tread part can be increased, and it is considered that heat generation by the tread rubber is facilitated.

A total content of fillers based on 100 parts by mass of the rubber component in the rubber composition is preferably 100 parts by mass or more from the viewpoint of facilitating heat generation by the tread rubber to further improve grip performance.

A tan δ at 100°C (100°C tan δ) of the rubber composition is preferably 0.40 or more from the viewpoint of further improving grip performance.

When 100°C $E_*$ represents a complex elastic modulus, in MPa, at 100°C of the rubber composition, 100°C tan δ/100°C $E_*$ is preferably greater than 0.23. It is considered that 100°C tan δ/100°C $E_*$ within the above-described range contributes to improvement of dry grip performance for which a heat generation effect due to deformation of the tread part is taken into account.

The tire relating to the present embodiment is appropriately used as a motorcycle tire.

It is preferable that the tread part comprises a crown part located in the center in a tire width direction, and a pair of shoulder parts located on the outer sides of the crown part in the tire width direction and that the shoulder parts are composed of the rubber composition. When the rubber composition is used for the shoulder parts of the tread part, dry grip performance during cornering is improved, so that it is considered that a turning speed can be improved.

<Definition>

A "tread part" is a member including a part forming a ground-contacting surface of a tire and is a member arranged on an outer side in a tire radial direction with respect to members forming a tire skeleton with steel or a textile material, such as a belt layer, a belt reinforcement layer, a carcass, and the like, on a cross section of the tire taken along a plane including a tire rotation axis, when the tire comprises these members.

A "standardized state" is a state in which the tire is rim-assembled to a standardized rim, filled with air at a standardized internal pressure, and applied with no load. Unless otherwise noted, a tire in a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by a calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = [(Dt/2)^2 - (Dt/2 - Ht)^2] \times \pi \times Wt$$

A "crown part" is a part of a tread part that is located in the center of the tread part, that reaches to the outer side in a tire axial direction with respect to positions that are located at distances of $\pm 5\%$ of a tread width from a tire equator as a center, and that does not reach to tread edges. However, in a case where a current-carrying rubber member is provided, a part corresponding to the current-carrying rubber member is excluded from the crown part.

A "shoulder part" is a part of a tread part that is located on an outer side of a crown part in a tire axial direction and that reaches to a tread edge.

A "tread width" is a distance from one tread edge to the other tread edge on a tread surface that is a portion of a tread part contacting a road surface, the one tread edge being an outer end in the tire axial direction.

A "current-carrying rubber member" is a member that is embedded in a tread part for the purpose of effectively discharging static electricity occurring during running of a tire into a ground-contacting surface, a part of the member being exposed to the tire ground-contacting surface. Examples of the current-carrying rubber member include one called a base pen.

A "rubber component of a rubber composition" refers to a component contributing to crosslinking in the rubber composition and is generally a component having a weight-average molecular weight (Mw) of 10000 or more.

A "sustainable resin" refers to a resin component in which part of or all of its components are made of raw materials derived from natural resources such as biomass and the like or are made of recycle-derived raw materials.

A "plasticizer" is a material giving a rubber component plasticity and is a component extracted from a rubber composition using acetone. Moreover, examples of the plasticizer include a plasticizer that is liquid (in a liquid state) at 25°C and a plasticizer that is solid at 25°C. However, the plasticizer shall not include wax and stearic acid commonly used in the tire industry.

A "content of a plasticizer" also includes an amount of a plasticizer contained in an extended rubber component previously extended with the plasticizer such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

<Measuring method>

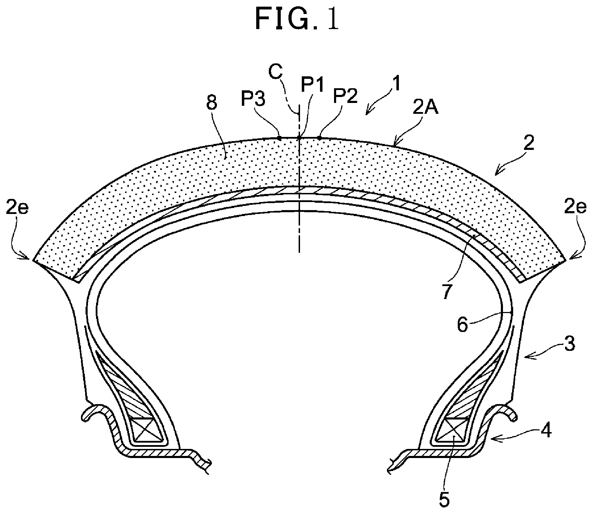

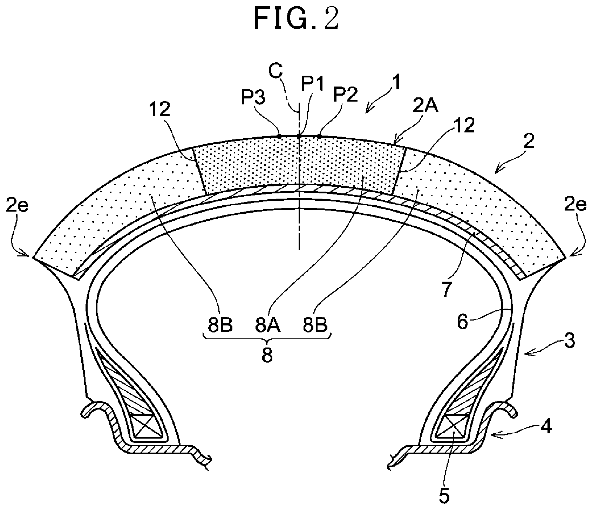

When P1 represents an intersection point between a tread surface 2A and a tire equator (tire center line) C on a tire meridian cross section of a tread part and P2 and P3 represent points on the tread surface 2A that are distant from P1 as a center toward the both sides in a tire axial direction, a distance between the points P2 and P3 being 2.5% of a tread width, a "radius of curvature R of a tread part in a tire equator" is calculated as a radius of curvature of an arc passing through the three points P1, P2, and P3 (FIGS. 1 and 2).

An "acetone extraction amount" can be calculated by immersing each rubber test piece in acetone for 72 hours in accordance with JIS K 6229:2015 to extract a soluble component, measuring a mass of each rubber test piece before and after the extraction, and using the following equation, (Acetone extraction amount (% by mass)) = {(mass of rubber test piece before extraction - mass of rubber test piece after extraction)/(mass of rubber test piece before extraction)} $\times$ 100.

"100°C tan $\delta$" is a loss tangent measured, using a dynamic viscoelasticity measuring device (for example, EPLEXOR series manufactured by gabo Systemtechnik GmbH), under a condition of a temperature at 100°C, a frequency of 10 Hz, an initial strain of 10%, a dynamic strain of $\pm$2%, and an extension mode. A sample for the measurement is a vulcanized rubber composition having a length of 20 mm, a width of 4 mm, and a thickness of 1 mm. In a case where the sample is prepared by being cut out from a tire, the sample is cut out from a tread part so that the tire circumferential direction becomes a long side and the tire radial direction becomes a thickness direction.

For a "tan $\delta$ peak temperature of a rubber composition", a temperature distribution curve of tan $\delta$ in a range from -60°C to 100°C is measured using a dynamic viscoelasticity measuring apparatus (for example, EPLEXOR series manufactured by gabo Systemtechnik GmbH) under a condition of a frequency of 10 Hz, an initial strain of 10%, an amplitude of $\pm$0.5%, and a temperature rising rate of 2°C/min, and a tan $\delta$ peak temperature is determined as a temperature corresponding to the largest value of tan $\delta$ in the obtained temperature distribution curve. In a case where two points at which tan $\delta$ has the largest value exist in the range from -60°C to 100°C, one of the two points that is on the lower temperature side than the other is determined as a tan $\delta$ peak temperature. Moreover, in a case where a temperature distribution curve in which tan $\delta$ gradually decreases with an increase of temperature in the range from -60°C to 100°C is obtained, a tan $\delta$ peak temperature is defined as -60°C from the above-described definition. A sample for the measurement is prepared in the same manner as in the case of 100°C tan $\delta$.

"100°C E$_*$" is a complex elastic modulus that is measured using a dynamic viscoelasticity measuring device (for example, EPLEXOR series manufactured by gabo Systemtechnik GmbH) under a condition of a temperature at 100°C, a frequency of 10 Hz, an initial strain of 10%, a dynamic strain of $\pm$2%, and an extension mode. A sample for the measurement is prepared in the same manner as in the case of 100°C tan $\delta$.

A "glass transition temperature (Tg) of an SBR" is calculated by removing an extending oil using acetone in accordance with JIS K 6229:2015 and subjecting a pure SBR content to differential scanning calorimetry (DSC) in accordance with JIS K 7121:2012.

A "styrene content" is calculated by pyrolysis gas chromatography or NMR measurement ($^1$H-NMR or $^{13}$C-NMR). For a component amount such as a "styrene content", there is a true value that does not depend on any measuring methods, unlike physical property values such as a complex elastic modulus (E$_*$) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component. The styrene content is applied to a rubber component having a repeating unit (styrene unit) derived from styrene such as, for example, an SBR and the like.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "styrene content". Therefore, it is preferable to use a measuring method that is as highly accurate as possible. The vinyl content is applied to a rubber component having a repeating unit derived from butadiene such as, for example, an SBR, a BR, and the like.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a true value that does not depend on any measuring methods, like a "styrene content". Therefore, it is preferable to use a measuring method that is as highly accurate as possible.

A "total styrene amount in a rubber component" is a total content, in % by mass, of the styrene units compounded in 100% by mass of the rubber component and is a value obtained by calculating, for each rubber component, a value obtained by multiplying a styrene content, in % by mass, by a mass fraction in the rubber component and summing up these values. Specifically, it is calculated by $\Sigma$ (styrene content (% by mass) of each styrene unit-containing rubber $\times$ content (% by mass) of each styrene unit-containing rubber in rubber component / 100). For example, when the rubber component consists of 20% by mass of a first SBR (styrene content: 25% by mass), 30% by mass of a second SBR (styrene content: 27.5% by mass), and 50% by mass of a BR, the total styrene amount in the rubber component is about 13.3% by mass (= (25$\times$20/100)+(27.5$\times$30/100)+(0$\times$10/100)).

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizer, and the like.

A "nitrogen adsorption specific surface area ($N_2SA$) of carbon black" is measured according to JIS K 6217-2:2017.

A "nitrogen adsorption specific surface area ($N_2SA$) of silica" is measured by a BET method according to ASTM D3037-93.

An "average primary particle size" is values calculated by an arithmetic mean of particle sizes of 400 particles which are photographed with a transmission or scanning electron microscope. In a case where the particle is in a spherical shape, a diameter of the sphere is defined as a particle size, and in cases of shapes other than the spherical shape, an equivalent circle diameter (positive square root of "$4 \times$(area of particle)/$\pi$") calculated from a microscope image is defined as a particle size. The average primary particle size is applied to silica, carbon black, and the like.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only.

[Tire]

The tire relating to the present embodiment is one comprising a tread part composed of a rubber composition described below. The tread part may be a single member or a member consisting of a plurality of parts. Although examples of the case where the tread part is a member consisting of a plurality of parts include, for example, a case where the tread part consists of a crown part located in the center in a tire axial direction and a pair of shoulder parts located on the outer sides of the crown part, the present invention is not limited to this case. In the case where the tread part is a member consisting of a plurality of parts, at least the shoulder parts are preferably ones composed of the rubber composition described below.

One embodiment of the present invention will be appropriately described below based on the drawings. FIG. 1 is one example of a cross-sectional view taken along a plane including a tire rotational axis (also referred to as a "tire axis") of a motorcycle tire (however, indication of grooves provided on a tread surface is omitted, and the same applies to FIGS. 2, 3, and 4). A tire 1 comprises a carcass 6 extending from a tread part 2 through a sidewall part 3 to a bead core 5 of a bead part 4, and a belt layer 7 arranged on an outer side of the carcass 6 in a tire radial direction and inside the tread part 2. On the above-described cross section, a tread surface 2A of the tread part 2 contacting a road surface is convex and extends in an arc shape with bended outward in the tire radial direction. Moreover, outer ends of the tread surface 2A in a tire axial direction are tread edges 2e. The tread part 2 may or may not have a groove.

In the tread part 2, a tread rubber 8 is arranged on the outside of the belt layer 7 in the radial direction. In the present embodiment, the tread rubber 8 constitutes a portion ranging from an outer surface of the belt layer 7 to the tread surface 2A.

FIG. 2 shows a variation of the tire relating to the present embodiment. For parts of the variation that are not explained below, the above-mentioned configurations of the tire can be adopted.

In FIG. 2, the tread rubber 8 is composed of a crown part 8A with a tire equator C centered thereon, and a pair of shoulder parts 8B adjacent to the crown part 8A and extending to the tread edges 2e. That is, two types of members of the crown part 8A and the shoulder parts 8B are arranged side by side from the vicinity of the tire equator C toward both sides in the tire axial direction. Besides, the crown part 8A may be further divided. Moreover, each of the pair of the shoulder parts 8B may be further divided.

In FIG. 2, the crown part 8A and the shoulder parts 8B are separated by normal lines 12 made to stand on the tread surface 2A, but a format of the separation is not limited, such as, for example, one for which they are separated by a boundary line outwardly or inwardly inclining in the tire axial direction from the tread surface 2A toward the belt layer 7.

A maximum length of a curved line length of the surface of the tread part of the crown part 8A in its width direction is preferably 20% or more, more preferably 25% or more, further preferably 33% or more of a curved line length of the entire tread part 2 in its width direction from the viewpoint of abrasion resistance. Moreover, the curved line length of the surface of the tread part of the crown part 8A in its width direction is preferably 70% or less, more preferably 60% or less, further preferably 55% or less of the curved line length of the entire tread part in its width direction, from the viewpoint of grip performance.

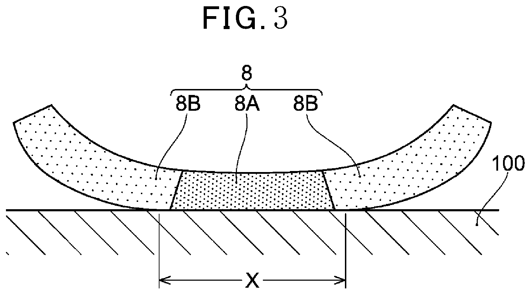

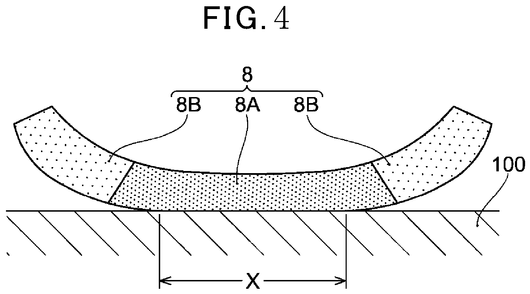

As shown in FIG. 3, a position of separation (a boundary line) between the crown part 8A and the shoulder parts 8B may be inside of a width X of a ground-contacting surface (a part where the tread part 8 comes into contact with a road surface 100 with a standardized internal pressure being applied and a standardized load being applied) or outside thereof (see FIG. 4). The state shown in FIG. 3 is referred to as a state being "inside a ground-contacting surface", and the state shown in FIG. 4 is referred to as a state being "outside a ground-contacting surface". From the viewpoint of prevention of a stepped abrasion caused by a difference in abrasion resistance of tread compounding, the position of separation is preferably outside the width X.

A radius of curvature R of the tread part on a tire equatorial plane is preferably less than 250 mm, more preferably less than 225 mm, further preferably less than 200 mm, from the viewpoint of the effects of the present invention. On the other hand, R is preferably more than 25 mm, more preferably more than 30 mm, further preferably more than 50 mm, further preferably more than 70 mm, particularly preferably more than 100 mm.

A tan $\delta$ peak temperature T, in °C, of the rubber composition constituting the tread part is 25.0°C or higher, preferably 25.5°C or higher, more preferably 26.0°C or higher. On the other hand, T is preferably 40.0°C or lower, more preferably 37.0°C or lower, further preferably 34.0°C or lower, particularly preferably 31.0°C or lower, from the viewpoint of suppressing hardening of the tread at an operational temperature of the tire. Besides, the tan $\delta$ peak temperature of the rubber composition can be appropriately adjusted depending on a type or a content of a rubber component, a plasticizer, or the like.

R/T is less than 10.0, preferably less than 9.5, more preferably less than 9.0, further preferably less than 8.5, further preferably less than 8.0, particularly preferably less than 7.8. When R/T is within the above-described ranges, it is considered that an amount of heat generation during running of the tire can be optimized. On the other hand, a lower limit value of a value of R/T is, but not particularly limited to, preferably greater than 2.0, more preferably greater than 3.0, further preferably greater than 4.0, particularly preferably greater than 5.0.

An acetone extraction amount of the rubber composition constituting the tread part is preferably 20% by mass or more, more preferably 25% by mass or more, further preferably 30% by mass or more, further preferably 35% by mass or more, particularly preferably 40% by mass or more, from the viewpoint of dry grip performance. Moreover, it is preferably 60% by mass or less, more preferably 55% by mass or less, further preferably 50% by mass or less, from the viewpoint of durability.

100°C tan $\delta$ of the rubber composition constituting the tread part is preferably 0.25 or more, more preferably 0.28 or more, further preferably 0.31 or more, further preferably 0.35 or more, particularly preferably 0.40 or more, from the viewpoint of dry grip performance. On the other hand, it is preferably 0.60 or less, more preferably 0.55 or less, further preferably 0.50 or less, from the viewpoint of durability.

In the present embodiment, 100°C tan $\delta$ is an index regarding heat generation of the rubber composition during running on a dry road surface. 100°C tan $\delta$ can be appropriately adjusted depending on types or contents of a rubber component, a filler, a plasticizer, a vulcanizing agent, a vulcanization accelerator, and the like which will be described below. For example, it tends to be increased by increasing a content of a filler (carbon black, silica, and the like) or a plasticizer. Besides, 100°C tan $\delta$ is measured by the above-described measuring method.

100°C $E_*$ of the rubber composition constituting the tread part is preferably 1.0 MPa or more, more preferably 1.1 MPa or more, further preferably 1.3 MPa or more, particularly preferably 1.5 MPa or more, from the viewpoint of exerting a restoring force against deformation to improve responsiveness. On the other hand, it is preferably 3.0 MPa or less, more preferably 2.5 MPa or less, further preferably 2.0 MPa or less, from the viewpoint of improvement of heat generation due to deformation of the tread part. Besides, 100°C $E_*$ of the rubber composition can be appropriately adjusted depending on a type or a content of a rubber component, a plasticizer, or the like.

100°C tan $\delta$/100°C $E_*$ tan $\delta$ is preferably greater than 0.17, more preferably greater than 0.19, further preferably greater than 0.21, particularly preferably greater than 0.23. It is considered that 100°C tan $\delta$/100°C $E_*$ within the above-described ranges contributes to improvement of dry grip performance for which a heat generation effect due to deformation of the tread part is taken into account. On the other hand, an upper limit value of a value of 100°C tan $\delta$/100°C $E_*$ is, but not particularly limited to, preferably less than 0.40, more preferably less than 0.35, further preferably less than 0.30.

[Rubber composition]

A rubber composition constituting the tread part relating to the present embodiment (which is hereinafter referred to as a "rubber composition relating to the present embodiment") is one comprising a rubber component comprising a styrene-butadiene rubber, a filler comprising carbon black, and a plasticizer comprising a resin component, and any rubber composition can be produced using raw materials described below depending on a tan $\delta$ peak temperature, 100°C tan $\delta$, 100°C $E_*$, an acetone extraction amount, and the like which are to be requested. The rubber composition relating to the present embodiment will be described below.

<Rubber component>

The rubber component relating to the present embodiment comprises a styrene-butadiene rubber (SBR) as an essential component, and furthermore, a diene-based rubber other than the SBR, such as a butadiene rubber (BR) and the like, can also be appropriately used. Moreover, the rubber component may be a rubber component consisting of an SBR.

Examples of the diene-based rubber other than the SBR include, for example, an isoprene-based rubber, a butadiene rubber (BR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be modified rubbers each treated with a modified group that can interact with a filler such as carbon black, silica, and the like or may be hydrogenated rubbers in which hydrogeneration treatment is performed on a part of an unsaturated bond. The diene-based rubber may be used alone, or two or more thereof may be used in combination. Moreover, as a diene-based rubber, an extended rubber previously extended with a plasticizer described below may be used.

A content of a diene-based rubber in a rubber component is preferably 70% by mass or more, more preferably 80% by mass or more, further preferably 90% by mass or more, particularly preferably 95% by mass or more. Moreover, the rubber component may be one consisting of a diene-based rubber.

(SBR)

The SBR is not particularly limited, examples of which include an unmodified solution-polymerized SBR (S-SBR), an unmodified emulsion-polymerized SBR (E-SBR), modified SBRs (a modified S-SBR, a modified E-SBR) thereof, and the like. Examples of the modified SBR include an SBR modified at its terminal and/or main chain using a compound having a functional group described below (a modifying agent); a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. These SBRs may be used alone, or two or more thereof may be used in combination.

An oil-extended SBR or a non-oil extended SBR can be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

Examples of the SBR that can be used in the present embodiment include, for example, those commercially available from JSR Corporation, Sumitomo Chemical Co., Ltd., Ube Corporation, Asahi Kasei Corporation, ZS Elastomer Co., Ltd., ARLANXEO, etc.

A styrene content of an SBR is preferably 20% by mass or more, more preferably 25% by mass or more, further preferably 30% by mass or more, further preferably 35% by mass or more, particularly preferably 40% by mass or more, from the viewpoint of the effects of the present invention. On the other hand, the styrene content of the SBR is preferably 60% by mass or less, more preferably 55% by mass or less, further preferably 50% by mass or less. Besides, the styrene content of the SBR is measured by the above-described measuring method.

A vinyl content of an SBR is preferably 10 mol% or more, more preferably 20 mol% or more, further preferably 30 mol% or more, from the viewpoint of the effects of the present invention. Moreover, the vinyl bond amount of the SBR is preferably 80 mol% or less, more preferably 70 mol% or less, further preferably 60 mol% or less. Besides, the vinyl content of the SBR is measured by the above-described measuring method.

A glass transition point (Tg) of an SBR is preferably -50°C or higher, more preferably -40°C or higher, further preferably -30°C or higher, from the viewpoint of the effects of the present invention. Moreover, the Tg of the SBR is preferably lower than 10°C, more preferably lower than 5°C, further preferably lower than 0°C. Besides, the Tg of the SBR is measured by the above-described measuring method.

A weight-average molecular weight (Mw) of an SBR is preferably 200,000 or more, more preferably 250,000 or more, further preferably 300,000 or more, from the viewpoint of grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of an SBR in the rubber component is preferably 40% by mass or more, more preferably 50% by mass or more, further preferably 60% by mass or more, particularly preferably 70% by mass or more, from the viewpoint of the effects of the present invention. On the other hand, an upper limit value of the content is not particularly limited.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. The BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of the high cis BR is preferably greater than 95 mol%, more preferably greater than 96 mol%, further preferably greater than 97 mol%. Besides, the cis content of the BR is measured by the above-described measuring method.

A weight-average molecular weight (Mw) of a BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of a BR in the rubber component is preferably 50% by mass or less, more preferably 40% by mass or less, further preferably 30% by mass or less, further preferably 25% by mass or less, particularly preferably 20% by mass or less, from the viewpoint of the effects of the present invention. Moreover, a lower limit value of the content can be, but not particularly limited to, for example, 1% by mass or more, 3% by mass or more, 5% by mass or more, or 10% by mass or more.

(Isoprene-based rubber)

As an isoprene-based rubber, for example, those common in the tire industry can be used, such as an isoprene rubber (IR), a natural rubber, and the like. Examples of the natural rubber include not only an unmodified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. The isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component is preferably less than 30% by mass, more preferably less than 20% by mass, further preferably less than 10% by mass, particularly preferably less than 5% by mass, from the viewpoint of the effects of the present invention. Moreover, a lower limit value of the content is not particularly limited.

A total styrene amount in the rubber component is preferably 20% by mass or more, more preferably 25% by mass or more, further preferably 30% by mass or more, further preferably 35% by mass or more, particularly preferably 40% by mass or more, from the viewpoint of heat generation. Moreover, the total styrene amount in the rubber component is preferably 55% by mass or less, more preferably 52% by mass or less, further preferably 48% by mass or less.

(Other rubber components)

The rubber component may comprise another rubber component other than diene-based rubbers as long as it does not affect the effects of the present invention. As another rubber component other than diene-based rubbers, a cross-linkable rubber component commonly used in the tire industry can be used, examples of which include, for example, non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. Moreover, besides the above-described rubber components, it may or may not comprise a known thermoplastic elastomer. The other rubber components may be used alone, or two or more thereof may be used in combination.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere and the like was absorbed by plants to be fixed, all of $^{14}C$ elements, which were also contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. **In** the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

<Filler>

The rubber composition relating to the present embodiment comprises a filler. The filler comprises carbon black as an essential component and may further comprise another filler such as silica and the like. Moreover, the filler may be a filler consisting of carbon black or a filler consisting of carbon black and silica.

(Carbon black)

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made of a biomass material such as lignin and the like or a recovered carbon black obtained by pyrolyzing a product comprising carbon black such as a tire and the like followed by refining may be used from the viewpoints of a life cycle assessment, etc.

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2/g$, more preferably greater than 90 $m^2/g$, further preferably greater than 100 $m^2/g$, particularly preferably greater than 110 $m^2/g$, from the viewpoint of reinforcing property. Moreover, it is preferably less than 250 $m^2/g$, more preferably less than 220 $m^2/g$, further preferably less than 190 $m^2/g$, from the viewpoints of heat generation and processability. Besides, the $N_2SA$ of the carbon black is measured by the above-described measuring method.

A content of carbon black based on 100 parts by mass of the rubber component is preferably 1 part by mass or more, more preferably 5 parts by mass or more, further preferably 10 parts by mass or more, further preferably 30 parts by mass or more, particularly preferably 50 parts by mass or more, from the viewpoint of reinforcing property. Moreover, it is preferably 150 parts by mass or less, more preferably 140 parts by mass or less, further preferably130 parts by mass or less, particularly preferably 120 parts by mass or less, from the viewpoint of suppression of heat generation.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

As silica relating to the present embodiment, silica made from a biomass material is appropriately used from the viewpoint of building a sustainable society. Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably 110 $m^2$/g or more, more preferably 130 $m^2$/g or more, further preferably 150 $m^2$/g or more, particularly preferably 170 $m^2$/g or more, from the viewpoints of fuel efficiency and abrasion resistance. Moreover, it is preferably 350 $m^2$/g or less, more preferably 300 $m^2$/g or less, further preferably 250 $m^2$/g or less, from the viewpoints of fuel efficiency and processability. Besides, the $N_2SA$ of the silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably 30 parts by mass or more, more preferably 50 parts by mass or more, further preferably 70 parts by mass or more, from the viewpoint of the effects of the present invention. Moreover, the content is preferably 150 parts by mass or less, more preferably 140 parts by mass or less, further preferably 130 parts by mass or less, particularly preferably 120 parts by mass or less.

(Other fillers)

Fillers other than silica and carbon black are not particularly limited, and those commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

A total content of fillers based on 100 parts by mass of the rubber component is preferably 50 parts by mass or more, more preferably 70 parts by mass or more, further preferably 90 parts by mass or more, particularly preferably 100 parts by mass or more, from the viewpoint of the effects of the present invention. Moreover, it is preferably 150 parts by mass or less, more preferably 140 parts by mass or less, further preferably 130 parts by mass or less, from the viewpoints of fuel efficiency and elongation at break.

(Silane coupling agent)

Silica is preferably used in combination with a silane coupling agent. The silane coupling agent is not particularly limited, and any silane coupling agents used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. The silane coupling agents may be used alone, or two or more thereof may be used in combination.

A content of a silane coupling agent based on 100 parts by mass of silica is preferably 1.0 parts by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Plasticizer>

The rubber composition relating to the present embodiment comprises a plasticizer. The plasticizer comprises a resin component as an essential component and may further comprise another resin component such as oil and the like.

A "plasticizer" in the present specification is a material giving a rubber component plasticity and includes both a plasticizer that is liquid (in a liquid state) at 25°C and a plasticizer that is solid at 25°C. Examples of the plasticizer include a resin component, oil, a liquid rubber, an ester-based plasticizer, and the like. These plasticizers may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizers. The plasticizers may be used alone, or two or more thereof may be used in combination.

(Resin component)

For the rubber composition relating to the present embodiment, a resin component may be used in combination. The resin component that can be used in the present embodiment is not particularly limited, and any resin commonly used in the tire industry can be used, examples of which include, for example, adhesive resins such as a terpene-based resin, a rosin-based resin, a dicyclopentadiene-based resin, an aromatic vinyl-based resin, a C9-based resin, a C5-based resin, a C5/C9-based resin, a phenol-based resin, and the like. These resin components may be used alone, or two or more thereof may be used in combination. Each resin component may also be used alone, or two or more thereof may be used in combination, respectively.

In the present embodiment, a sustainable resin is appropriately used as a resin component. In the present specification, a "sustainable resin" refers to a resin component in which part of or all of its components are made of raw materials derived from natural resources such as biomass and the like or are made of recycle-derived raw materials. That is, the sustainable resin comprises, as a constituent, a natural resources-derived raw material or a recycle-derived raw material. Moreover, the sustainable resin may further comprise a usual raw material derived from petroleum. Examples of the resin component comprising a natural resources-derived raw material include, for example, a terpene-based resin, a rosin-based resin, an aromatic vinyl-based resin derived from a biomass naphtha, and the like. Examples of the resin component comprising a recycle-derived raw material include, for example, a C5-based resin derived from pyrolysis oil of a tire, and the like. Among them, the sustainable resin is preferably one or more resins selected from the group consisting of a terpene-based resin and a rosin-based resin.

A "terpene-based resin" refers to a resin comprising a terpene compound such as $\alpha$-pinene, $\beta$-pinene, limonene, dipentene, and the like as a monomer component, and may be one obtained by hydrogenating or modifying it. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. As a terpene compound used as a monomer component for the terpene-based resin, a natural resources-derived terpene compound can be used. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As a rosin acid compound described above, a natural resources-derived rosin acid compound can be used. As the rosin-based resin, for example, those commercially available from Harima Chemicals Group, Inc., Arakawa Chemical Industries, Ltd., IREC Co., Ltd., etc. can be used.

A "dicyclopentadiene-based resin" refers to a resin comprising cyclopentadiene (CPD) and/or dicyclopentadiene (DCPD) as a monomer component having the largest content and may be one obtained by hydrogenating or modifying it.

As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

A "C5/C9-based resin" refers to a resin obtained by copolymerizing the C5 fraction and the C9 fraction and may be one obtained by hydrogenating or modifying it. As the C5/C9-based petroleum resin, for example, those commercially available from Tosoh Corporation, Zibo Luhua Hongjin New Material Group Co., Ltd, etc. can be used.

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

The resin component may be a resin component comprising a raw material derived from natural resources such as biomass and the like. Examples of the natural resources include, but not particularly limited to, for example, sugar and wood, a plant residue after acquisition of a useful component, a plant-derived ethanol, a biomass naphtha, and the like. Besides, whether or not a raw material of a resin component is derived from biomass can be determined from percent Modern Carbon (pMC) measured according to ASTM D6866-10.

Examples of the resin component comprising a natural resources-derived raw material include, but not particularly limited to, adhesive resins such as a terpene-based resin, a rosin-based resin, a dicyclopentadiene-based resin, an aromatic vinyl-based resin, a C9-based resin, a C5-based resin, a C5/C9-based resin, a phenol-based resin, and the like. Specific examples of the resin component comprising a natural resources-derived raw material include, for example, an aromatic vinyl-based resin derived from a biomass naphtha, and the like. Moreover, as a terpene compound constituting a terpene-based resin or a rosin acid compound constituting a rosin-based resin, naturally-derived ones can be used.

Examples of the resin component comprising a recycle-derived raw material include, but not particularly limited to, adhesive resins such as a terpene-based resin, a rosin-based resin, a dicyclopentadiene-based resin, an aromatic vinyl-based resin, a C9-based resin, a C5-based resin, a C5/C9-based resin, a phenol-based resin, and the like. Specific examples of the resin component comprising a recycle-derived raw material include, for example, a C5-based resin derived from pyrolysis oil of a tire, and the like.

A softening point of a resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of a resin component based on 100 parts by mass of the rubber component (a total amount of all of a plurality of resin components when used in combination) is preferably 30 parts by mass or more, more preferably 40 parts by mass or more, further preferably 50 parts by mass or more, further preferably 55 parts by mass or more, further preferably 60 parts by mass or more, further preferably 65 parts by mass or more, particularly preferably 70 parts by mass or more, from the viewpoint of the effects of the present invention. On the other hand, the content is preferably 130 parts by mass or less, more preferably 120 parts by mass or less, further preferably 110 parts by mass or less, particularly preferably 100 parts by mass or less, from the viewpoint of suppression of heat generation.

(Oil)

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like. The mineral oils may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, whale oils, oleyl alcohol derived therefrom, and the like.

A content of oil when compounded based on 100 parts by mass of the rubber component is preferably 20 parts by mass or more, more preferably 30 parts by mass or more, further preferably 35 parts by mass or more, particularly preferably 40 parts by mass or more. Moreover, the content is preferably 100 parts by mass or less, more preferably 90 parts by mass or less, further preferably 80 parts by mass or less, particularly preferably 70 parts by mass or less.

(Liquid rubber)

The liquid rubber is not particularly limited as long as it is a polymer in a liquid state at 25°C, examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

A content of a liquid rubber when compounded based on 100 parts by mass of the rubber component is preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less.

(Ester-based plasticizer)

Examples of the ester-based plasticizer include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizers may be used alone, or two or more thereof may be used in combination.

A content of a plasticizer based on 100 parts by mass of the rubber component (a total amount of all of a plurality of plasticizers when used in combination) is preferably 90 parts by mass or more, more preferably 100 parts by mass or more, further preferably 110 parts by mass or more, particularly preferably 120 parts by mass or more, from the viewpoint of the effects of the present invention. Moreover, the content is preferably 180 parts by mass or less, more preferably 170 parts by mass or less, further preferably 160 parts by mass or less, particularly preferably 150 parts by mass or less.

A content rate of a resin component in the plasticizer is preferably 40% by mass or more, more preferably 50% by mass or more, further preferably 55% by mass or more, particularly preferably 60% by mass or more, from the viewpoint of the effects of the present invention. Moreover, the content rate is preferably 85% by mass or less, more preferably 80% by mass or less, further preferably 75% by mass or less.

<Other compounding agents>

The rubber composition relating to the present embodiment can appropriately comprises compounding agents conventionally and commonly used in the tire industry, such as, for example, a vulcanized rubber particle, processing aid, wax, an antioxidant, stearic acid, zinc oxide, a vulcanizing agent, a vulcanization accelerator, and the like, in addition to the rubber component, the filler, and the plasticizer.

The vulcanized rubber particle is a particle made of a vulcanized rubber. Specifically, a rubber powder specified in JIS K6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.

The vulcanized rubber particle is not particularly limited and may be an unmodified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used.

A content of a vulcanized rubber particle when compounded based on 100 parts by mass of the rubber component can be appropriately adjusted, for example, within a range of greater than 1 part by mass and less than 80 parts by mass.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha$,$\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, particularly preferably 0.7 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of a vulcanizing agent when an oil-containing sulfur is used as the vulcanizing agent is defined as a total content of pure sulfur contained in the oil-containing sulfur.

Examples of the vulcanizing agent other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used. The vulcanizing agent can be used alone, or two or more thereof can be used in combination.

Examples of the vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid salt-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, caprolactam disulfide, and the like. The vulcanization accelerators may be used alone, or two or more thereof may be used in combination. Among them, from the viewpoint that the desired effects can be more appropriately obtained, one or more vulcanization accelerators selected from the group consisting of a sulfenamide-based vulcanization accelerator, a thiazole-based vulcanization accelerator, and a guanidine-based vulcanization accelerator are preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, DPG is preferable.

A content of a vulcanization accelerator when compounded based on 100 parts by mass of the rubber component is preferably 0.5 parts by mass or more, more preferably 1.0 parts by mass or more, further preferably 1.5 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials each comprising a carbon atom (for example, a rubber, oil, a resin component, a vulcanization accelerator, an antioxidant, a surfactant, and the like) may be derived from carbon dioxide in the atmosphere. As a method of obtaining these various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like. The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can be also divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire relating to the present embodiment, which comprises a tread part composed of the above-described rubber composition, can be produced using corresponding rubber compositions, respectively, by a usual method. That is, an unvulcanized rubber composition obtained by the above-described method, which corresponds to the tread part, is extruded into a shape of the tread part with an extruder equipped with a mouthpiece having a predetermined shape, which is then attached together with other tire members on a tire molding machine to form an unvulcanized tire by a usual method. The tire relating to the present embodiment can be produced by heating and pressurizing this unvulcanized tire in a vulcanizer. Examples of vulcanization conditions include, but not particularly limited to, for example, a method of vulcanizing at 150°C to 200°C for 10 to 30 minutes.

[Applications of tire]

The tire relating to the present embodiment can be used as a tire for a passenger car, a heavy-duty tire, a tire for a large SUV, a motorcycle tire, or the like and is preferably used as a motorcycle tire. In a case where the tire relating to the present embodiment is used as a motorcycle tire, a form of the tire is not particularly limited and may be any of a pneumatic tire and a solid tire, and the tire relating to the present embodiment is preferably used as a pneumatic tire. Moreover, the tire relating to the present embodiment can be also used for any of various applications, such as an on-road tire, an off-road tire, and a racing tire.

EXAMPLE

Hereinafter, examples considered to be preferable in implementing the present invention (Examples) will be described, though the scope of the present invention is not limited to these Examples. Results, which are calculated based on evaluation methods described below considering a tire comprising a tread part, the tire being obtained in accordance with compounding shown in Table 1 using various chemicals described below, are shown in Table 1.

Various chemicals used in Examples and Comparative examples are collectively shown below.

SBR1: SE-6529 manufactured by Sumitomo Chemical Co., Ltd. (unmodified S-SBR, styrene content: 43% by mass, vinyl content: 57 mol%, Tg: -4°C, Mw: 1,200,000, comprising 44 parts by mass of an extending oil content based on 100 parts by mass of a rubber solid content)

SBR2: Tufdene 4850 manufactured by Asahi Kasei Corporation (unmodified S-SBR, styrene content: 40% by mass, vinyl content: 46 mol%, Tg: -25°C, Mw: 350,000, comprising 50 parts by mass of an extending oil content based on 100 parts by mass of a rubber solid content)

BR: Ubepol BR (Registered Trademark) 150B manufactured by UBE Corporation (cis content: 97 mol%, Mw: 440,000)

Carbon black: Show Black N110 manufactured by Cabot Japan K.K. ($N_2SA$: 142 $m^2$/g)

Silica: Ultrasil VN3 manufactured by Evonik Industries AG ($N_2SA$: 175 $m^2$/g, average primary particle size: 18 nm)

Silane coupling agent: Si69 manufactured by Evonik Industries AG (bis(3-triethoxysilylpropyl)tetrasulfide)

Resin component 1: Koresin manufactured by BASF (p-t-butylphenol acetylene resin, softening point: 145°C)

Resin component 2: YS Resin PX1150N manufactured by YASUHARA CHEMICAL CO., LTD. (non-hydrogenated polyterpene resin, softening point: 115°C)

Wax: OZOACE 0355 manufactured by Nippon Seiro Co., Ltd. (paraffin wax)

Antioxidant: Antigen 6C manufactured by Sumitomo Chemical Co., Ltd. (N-(1,3-dimethylbutyl)-N'-phenyl-p-phenylenediamine)

Stearic acid: Bead stearic acid "CAMELLIA" manufactured by NOF CORPORATION

Zinc oxide: Ginrei R manufactured by Toho Zinc Co., Ltd.

Sulfur: HK-200-5 manufactured by Hosoi Chemical Industry Co., Ltd. (5% oil-containing powdery sulfur)

Vulcanization accelerator: Nocceler NS-G manufactured by Ouchi Shinko Chemical Industry Co., Ltd. (N-tert-butyl-2-benzothiazolyl sulfenamide (TBBS))

(Examples and Comparative examples)

According to the compounding formulations shown in Table 1, using a 1.7 L closed Banbury mixer, all chemicals other than sulfur and a vulcanization accelerator are kneaded for 1 to 10 minutes until a temperature reaches a discharge temperature at 150°C to 160°C to obtain a kneaded product. Next, using a twin-screw open roll, sulfur and the vulcanization accelerator are added to the kneaded product, and the mixture is kneaded for 4 minutes until the temperature reaches 105°C to obtain an unvulcanized rubber composition. The unvulcanized rubber composition is used to be molded into a shape of a tread part, which is then attached together with other tire members to prepare an unvulcanized tire, and the unvulcanized tire is vulcanized at 170°C to obtain each test tire listed in Table 1. Besides, the test tire has a basic structure shown in FIG. 1, and a size of the test tire shall be 120/70ZR17 for a front tire and 180/55ZR 17 for a rear tire.

<Measurement of acetone extraction amount>

For a rubber test piece prepared by being cut out from a tread part of each test tire, an acetone extraction amount is calculated by the following equation after immersing the rubber test piece in acetone for 72 hours in accordance with JIS K6229:2015 to extract a soluble component and measuring masses of each rubber test piece before and after the extraction,

Acetone extraction amount (% by mass) = {(mass of rubber test piece before extraction - mass of rubber test piece after extraction)/(mass of rubber test piece before extraction)} × 100.

<Measurement of tan δ peak temperature>

For each vulcanized rubber test piece prepared by being cut out from a tread part of each test tire with 20 mm in length, 4 mm in width, and 1 mm in thickness of so that a tire circumferential direction becomes a long side and a tire radial direction becomes a thickness direction, a temperature distribution curve of tan δ in a range of -60°C to 100°C is measured using a dynamic viscoelasticity measuring device (EPLEXOR series manufactured by gabo Systemtechnik GmbH) under a condition of a frequency of 10 Hz, an initial strain of 10%, an amplitude of ±0.5%, and a temperature rising rate of 2°C/min, and a temperature corresponding to the largest tan δ value in the obtained temperature distribution curve is determined as a tan δ peak temperature.

<Measurement of 100 tan δ and 100°C E*>

For each vulcanized rubber test piece prepared by being cut out from a tread part of each test tire with 20 mm in length, 4 mm in width, and 1 mm in thickness so that a tire circumferential direction becomes a long side and a tire radial direction becomes a thickness direction, a loss tangent tan δ and a complex elastic modulus E* are measured using a dynamic viscoelasticity measuring device (EPLEXOR series manufactured by gabo Systemtechnik GmbH) under a condition of a temperature at 100°C, a frequency of 10 Hz, an initial strain of 10%, a dynamic strain of ±2%, and an extension mode.

<Dry grip performance>

Each test tire is assembled to a standardized rim and mounted to a rear wheel of a test vehicle (a large motorcycle with a displacement of 1000 cc) under a condition of an internal pressure of 200 kPa. This test vehicle is made to run at 100 km/h on a test course with a dry asphalt road surface, and test drivers perform sensory evaluations on stability of control. The evaluations are performed using integer values of 1 to 5 points, and a total score by 20 test drivers is calculated based on evaluation criteria that the higher the score is, the more excellent the stability of control in steering is. A total score of the reference Comparative example (Comparative example 2) is converted into a reference value (100), and an evaluation result for each test tire is indicated as an index in proportion to the total score. The results show that the larger the index is, the better the dry grip performance is.

Table 1

|  | Example | | | | |
|---|---|---|---|---|---|
|  | 1 | 2 | 3 | 4 | 5 |
| Compounding amount (parts by mass) | | | | | |
| SBR1 (Oil content) | 144 (44) | 144 (44) | 144 (44) | 144 (44) | 144 (44) |
| SBR2 (Oil content) | - | - | - | - | - |
| BR | - | - | - | - | - |
| Carbon black | 90 | 90 | 100 | 100 | 100 |
| Silica | - | - | - | - | - |
| Silane coupling agent | - | - | - | - | - |
| Oil | 5 | 5 | 10 | - | - |
| Resin component 1 | 70 | 70 | 75 | 85 | - |
| Resin component 2 | - | - | - | - | 95 |
| Wax | 2.5 | 2.5 | 2.5 | 2.5 | 2.5 |
| Antioxidant | 2.0 | 2.0 | 2.0 | 2.0 | 2.0 |
| Stearic acid | 2.0 | 2.0 | 2.0 | 2.0 | 2.0 |
| Zinc oxide | 2.0 | 2.0 | 2.0 | 2.0 | 2.0 |
| Sulfur | 1.5 | 1.5 | 1.5 | 1.5 | 1.5 |
| Vulcanization accelerator | 4.0 | 4.0 | 4.0 | 4.0 | 4.0 |
| Total styrene amount (% by mass) | 43 | 43 | 43 | 43 | 43 |
| Acetone extraction amount (% by mass) | 39 | 39 | 40 | 40 | 42 |
| Content of resin component in plasticizer (% by mass) | 59 | 59 | 58 | 66 | 68 |
| 100°C tan $\delta$ | 0.36 | 0.36 | 0.40 | 0.42 | 0.36 |
| 100°C $E_*$ (MPa) | 1.6 | 1.6 | 1.7 | 1.7 | 1.6 |
| 100°C tan $\delta$/100°C $E_*$ | 0.23 | 0.23 | 0.24 | 0.24 | 0.23 |
| Tan $\delta$ peak temperature T (°C) | 25.8 | 25.8 | 26.5 | 28.6 | 26.2 |
| Radius of curvature R (mm) | 200 | 150 | 200 | 200 | 200 |
| R/T | 7.8 | 5.8 | 7.5 | 7.0 | 7.6 |
| Dry grip performance | 106 | 113 | 117 | 123 | 115 |

|  | Example | | | Comparative example | |
|---|---|---|---|---|---|
|  | 6 | 7 | 8 | 1 | 2 |
| Compounding amount (parts by mass) | | | | | |

(continued)

|  | Example | | | Comparative example | |
|---|---|---|---|---|---|
|  | 6 | 7 | 8 | 1 | 2 |
| SBR1 (Oil content) | - | 86,4 (26.4) | 144 (44) | 144 (44) | 144 (44) |
| SBR2 (Oil content) | 150 (50) | - | - | - | - |
| BR | | 40 | - | - | - |
| Carbon black | 110 | 100 | 10 | 90 | 90 |
| Silica | - | - | 80 | - | - |
| Silane coupling agent | - | - | 6.4 | - | - |
| Oil | - | - | - | 20 | 5 |
| Resin component 1 | 90 | 130 | 85 | 55 | 70 |
| Resin component 2 | - | - | - | - | - |
| Wax | 2.5 | 2.5 | 2.5 | 2.5 | 2.5 |
| Antioxidant | 2.0 | 2.0 | 2.0 | 2.0 | 2.0 |
| Stearic acid | 2.0 | 2.0 | 2.0 | 2.0 | 2.0 |
| Zinc oxide | 2.0 | 2.0 | 2.0 | 2.0 | 2.0 |
| Sulfur | 1.5 | 1.5 | 1.5 | 1.5 | 1.5 |
| Vulcanization accelerator | 4.0 | 4.0 | 4.0 | 4.0 | 4.0 |
| Total styrene amount (% by mass) | 40 | 26 | 43 | 43 | 43 |
| Acetone extraction amount (% by mass) | 41 | 44 | 39 | 39 | 39 |
| Content of resin component in plasticizer (% by mass) | 64 | 83 | 66 | 46 | 59 |
| 100°C tan $\delta$ | 0.46 | 0.46 | 0.27 | 0.33 | 0.36 |
| 100°C E$_*$ (MPa) | 1.8 | 1.4 | 1.1 | 1.6 | 1.6 |
| 100°C tan $\delta$/100°C E$_*$ | 0.27 | 0.33 | 0.24 | 0.21 | 0.23 |
| Tan $\delta$ peak temperature T (°C) | 26.0 | 25.2 | 25.5 | 19.4 | 25.8 |
| Radius of curvature R (mm) | 200 | 200 | 200 | 200 | 300 |
| R/T | 7.7 | 7.9 | 7.8 | 10.3 | 11.6 |
| Dry grip performance | 126 | 121 | 111 | 96 | 100 |

REFERENCE SIGNS LIST

1. Tire
2. Tread part
2A. Tread surface
2e. Tread edge
3. Sidewall part
4. Bead part
5. Bead core
6. Carcass
7. Belt layer
8. Tread rubber
8A. Crown part
8B. Shoulder part
100. Road surface
C. Tire equator (tire center line)
X. Width of ground-contacting surface

**Claims**

1. A tire comprising a tread part,

the tread part being composed of a rubber composition comprising a rubber component, a filler, and a plasticizer,
wherein the rubber component comprises a styrene-butadiene rubber,
wherein the filler comprises carbon black,
wherein the plasticizer comprises a resin component, and wherein T is 25.0 or more, preferably 25.5 or more and 40.0 or less, and R/T is less than 10.0, preferably greater than 2.0 and less than 9.0, more preferably greater than 3.0 and less than 8.0,
where R represents a radius of curvature, in mm, of the tread part in a tire equator, and T represent a tan $\delta$ peak temperature, in °C, of the rubber composition.

2. The tire of claim 1, wherein a content of the plasticizer based on 100 parts by mass of the rubber component in the rubber composition is 120 parts by mass or more.

3. The tire of claim 1 or 2, wherein a content rate of the resin component in the plasticizer is 60% by mass or more.

4. The tire of any one of claims 1 to 3, wherein the resin component comprises a sustainable resin.

5. The tire of any one of claims 1 to 4, wherein a content of the resin component based on 100 parts by mass of the rubber component in the rubber composition is 50 parts by mass or more, preferably 60 parts by mass or more, more preferably 70 parts by mass or more and 120 parts by mass or less.

6. The tire of any one of claims 1 to 5, wherein an acetone extraction amount of the rubber composition is 30% by mass or more.

7. The tire of any one of claims 1 to 5, wherein an acetone extraction amount of the rubber composition is 40% by mass or more.

8. The tire of any one of claims 1 to 7, wherein a total styrene amount in the rubber component is 40% by mass or more.

9. The tire of any one of claims 1 to 8, wherein R is less than 250.

10. The tire of any one of claims 1 to 8, wherein R is less than 200.

11. The tire of any one of claims 1 to 10, wherein a total content of fillers based on 100 parts by mass of the rubber component in the rubber composition is 100 parts by mass or more.

12. The tire of any one of claims 1 to 11, wherein a tan $\delta$ at 100°C (100°C tan $\delta$) of the rubber composition is 0.40 or more.

13. The tire of claim 12, wherein 100°C tan $\delta$/100°C $E_*$ is greater than 0.23, preferably greater than 0.23 and less than 0.40, where 100°C $E_*$ represents a complex elastic modulus, in MPa, at 100°C of the rubber composition.

14. The tire of any one of claims 1 to 13, wherein the tire is a motorcycle tire.

15. The tire of claim 14,

wherein the tread part comprises

a crown part located in the center in a tire width direction, and
a pair of shoulder parts located on the outer sides of the crown part in the tire width direction, and

wherein the shoulder parts are composed of the rubber composition.

# FIG. 1

# FIG. 2

# FIG. 3

FIG. 4

Europäisches
Patentamt

European
Patent Office

Office européen
des brevets

## EUROPEAN SEARCH REPORT

**Application Number**

EP 25 19 7417

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 915 807 A1 (SUMITOMO RUBBER IND [JP]) 1 December 2021 (2021-12-01) * examples 1-11 * * paragraph [0004] * ----- | 1-15 | INV. C08L9/06 B60C1/00 C08K3/04 |
| A | EP 3 299 411 A1 (SUMITOMO RUBBER IND [JP]) 28 March 2018 (2018-03-28) * claims * * examples 1-20 * * paragraphs [0001], [0012] * ----- | 1-15 | |
| A | EP 3 725 549 A1 (BRIDGESTONE CORP [JP]) 21 October 2020 (2020-10-21) * examples 1-3 * * paragraphs [0010], [0140] * ----- | 1-15 | |

| | |
|---|---|
| | TECHNICAL FIELDS SEARCHED (IPC) |
| | B60C C08L C08K |

The present search report has been drawn up for all claims

| Place of search | Date of completion of the search | Examiner |
|---|---|---|
| Munich | 26 January 2026 | Baekelmans, Didier |

EPO FORM 1503 03.82 (P04C01)

## ANNEX TO THE EUROPEAN SEARCH REPORT
## ON EUROPEAN PATENT APPLICATION NO.

EP 25 19 7417

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2026

| Patent document cited in search report | | Publication date | Patent family member(s) | | Publication date |
|---|---|---|---|---|---|
| EP 3915807 | A1 | 01-12-2021 | EP | 3915807 A1 | 01-12-2021 |
| | | | JP | 7497618 B2 | 11-06-2024 |
| | | | JP | 2021187265 A | 13-12-2021 |
| EP 3299411 | A1 | 28-03-2018 | CN | 107614590 A | 19-01-2018 |
| | | | EP | 3299411 A1 | 28-03-2018 |
| | | | US | 2018134079 A1 | 17-05-2018 |
| | | | WO | 2016199555 A1 | 15-12-2016 |
| EP 3725549 | A1 | 21-10-2020 | EP | 3725549 A1 | 21-10-2020 |
| | | | JP | 7111740 B2 | 02-08-2022 |
| | | | JP | WO2019117173 A1 | 17-12-2020 |
| | | | US | 2021213784 A1 | 15-07-2021 |
| | | | WO | 2019117173 A1 | 20-06-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019203073 A
- EP 3427975 A
- JP 6856781 B
- EP 3173251 A
- JP 2009002594 A


**Non-patent literature cited in the description**

- *Rubber Chemistry and Technology*, 2012, vol. 85 (3)
- A Comparison of Surface Morphology and Chemistry of Pyrolytic Carbon Blacks with Commercial Carbon Blacks. *Powder Technology*, 2005, vol. 160, 190-193
- Akita Prefectural University Web Journa, vol. 6, 216-222